(19) Europäisches Patentamt
European Patent Office
Office européen des brevets

(11) Veröffentlichungsnummer: **0 265 807 B1**

(12) # EUROPÄISCHE PATENTSCHRIFT

(45) Veröffentlichungstag der Patentschrift: **27.05.92**

(51) Int. Cl.$^5$: **C09D 7/06**

(21) Anmeldenummer: **87115235.1**

(22) Anmeldetag: **17.10.87**

(54) **Verwendung von Polyoxyalkylen-Polysiloxan-Blockmischpolymerisaten als Mittel zur Verbesserung der Kratzfestigkeit und Erhöhung der Gleitfähigkeit von Lackoberflächen.**

(30) Priorität: **31.10.86 DE 3637155**

(43) Veröffentlichungstag der Anmeldung:
**04.05.88 Patentblatt 88/18**

(45) Bekanntmachung des Hinweises auf die Patenterteilung:
**27.05.92 Patentblatt 92/22**

(84) Benannte Vertragsstaaten:
**BE CH DE FR GB IT LI NL**

(56) Entgegenhaltungen:
**DE-A- 3 508 292**
**DE-A- 3 803 866**
**FR-A- 2 157 226**

(73) Patentinhaber: **Th. Goldschmidt AG**
**Goldschmidtstrasse 100 Postfach 101461**
**W-4300 Essen 1(DE)**

(72) Erfinder: **Fink, Hans-Ferdi**
**Brassertstrasse 46**
**W-4300 Essen 1(DE)**
Erfinder: **Berger, Roland, Dr.**
**Spelbergs Busch 6**
**W-4630 Bochum 6(DE)**
Erfinder: **Heilen, Wernfried**
**Am Marienstift 7**
**W-4234 Alpen(DE)**
Erfinder: **Muss, Peter**
**Stubertal 77**
**W-4300 Essen 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Bei der industriellen Herstellung von Gegenständen mit lackierter Oberfläche bereitet die Handhabung der Gegenstände mit frischer, insbesondere heißer Lackoberfläche Schwierigkeiten. So ist es z.B. bei der Serienfertigung von Gegenständen aus Holzwerkstoffen, wie z.B. Türblätter, Schrankwände, Tischplatten und dgl., nicht immer zu vermeiden, daß die nach der Aushärtung des Lackes vom Band abgenommenen und gestapelten lackierten Elemente Schäden an der Lackoberfläche erleiden. Ähnliche Probleme gibt es beim Lackieren von Blechen, z.B. beim sogenannten Coil-Coating-Prozeß. Das Problem des Auftretens von Oberflächenbeschädigungen des Lackes ist auch in der Automobilindustrie, insbesondere beim Transport und der Montage bereits lackierter Karosserieteile, bekannt.

Man hat bereits versucht, die Handhabbarkeit frisch lackierter Gegenstände dadurch zu verbessern, daß man dem Lack reibungsmindernde Zusätze, wie Öle oder Wachse, zugesetzt oder diese auf die lackierten Oberflächen aufgebracht hat. Beim Zusatz derartiger Wachse treten aber Probleme mit der Verträglichkeit dieser Verbindungen mit den Lacksystemen auf. Häufig wird auch die Ausbildung eines fehlerfreien Lackfilmes durch den Zusatz dieser Substanzen gestört oder behindert. Das nachträgliche Aufbringen von Wachs auf die Lackschicht kann auch nicht befriedigen, da hierdurch die Fertigungskosten erhöht werden und überdies die Schutzschichten am Ende Fertigung aufgebracht werden müssen.

Untersuchungen über die Verbesserung der Kratzfestigkeit und Erhöhung der Gleitfähigkeit von Lackoberflächen sind bisher nicht veröffentlicht worden. Es fehlt insbesondere an systematischen Arbeiten über die Wirkungsweise derartiger Zusätze und Abhängigkeit der Eigenschaften dieser Zusätze von ihrer Struktur. Die in der Praxis verwendeten Verbindungen sind in der Regel empirisch gefunden worden.

Es besteht deshalb in der Praxis ein Bedarf an Lackzusatzmitteln, welche die Handhabbarkeit von insbesondere serienmäßig lackierten Gegenständen verbessern, wobei diese Zusatzmittel insbesondere die Kratzfestigkeit der frischen Lackoberflächen verbessern und die Gleitfähigkeit der Lackoberflächen erhöhen sollen. Dabei sollen derartige Zusatzmittel von der Art und Zusammensetzung des Lackes, dem sie zur Verbesserung der vorgenannten Eigenschaften zugesetzt werden, weitgehend unabhängig und universell anwendbar sein. Diese Zusatzmittel sollen in möglichst geringen mengen wirksam sein und die anwendungstechnischen Eigenschaften des Lackes nicht verschlechtern. Sie sollen insbesondere nicht die Ausbildung des Oberflächenfilmes und die Aushärtung des Lackes beeinträchtigen. Sie dürfen ferner keinen nachteiligen Einfluß auf die Stabilität des Lackes hinsichtlich des Absetzens oder Ausschwimmens von Pigmenten haben und dürfen die Verlaufeigenschaften nicht verschlechtern.

Der Erfindung liegt die Aufgabe zugrunde, Verbindungen zu finden, die diese vorgenannten Anforderungen erfüllen und in sehr geringer Menge wirksam sind.

Diese Aufgabe wird erfindungsgemäß gelöst durch die Verwendung von Verbindungen der allgemeinen Formel

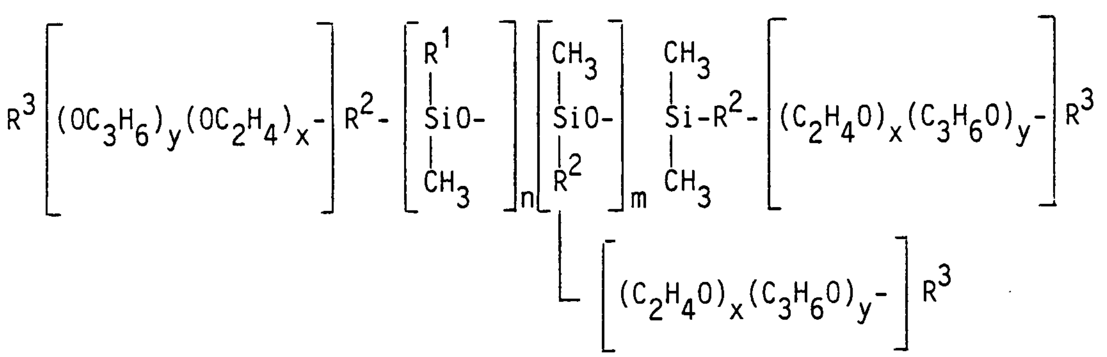

I

- $R^1$ = Alkylrest mit 1 bis 8 Kohlenstoffatomen,
- $R^2$ = -O-, $(CH_2)_pO$-, wobei p = 2, 3 oder 4 ist,
- $R^3$ = Wasserstoffrest, Alkylrest mit 1 bis 4 Kohlenstoffatomen oder Acetylrest,
- n = 40 bis 60,
- m = 0 bis 3,

wobei x und y so gewählt sind, daß das Molgewicht des Polyoxyalkylenblocks 1400 bis 3000 beträgt und das Molverhältnis x : y = 0,8 bis 2,2 ist,

in Mengen von 0,001 bis 0,5 Gew.-%, bezogen auf Lack, als Mittel zur Verbesserung der Kratzfestigkeit und Erhöhung der Gleitfähigkeit von Lackoberflächen.

$R^1$ ist vorzugsweise ein Methylrest. $R^1$ kann jedoch auch die Bedeutung eines Alkylrestes mit bis zu 8 Kohlenstoffatomen haben. Die Alkylreste mit 3 bis 8 Kohlenstoffatomen können verzweigt sein, jedoch sind die geradkettigen Alkylreste bevorzugt.

$R^2$ ist ein zweiwertiger Rest, der die Siloxyeinheit mit einem Polyoxyalkylenblock verbindet. Die Verknüpfung zwischen dem Si-Atom der Siloxyeinheit und dem Kohlenstoffatom des Polyoxyalkylenblockes kann über ein Sauerstoff- oder Kohlenstoffatom erfolgen.

$R^3$ ist ein Wasserstoffrest, ein Alkylrest mit 1 bis 4 Kohlenstoffatomen oder ein Acetylrest. Bevorzugt ist $R^3$ ein Wasserstoffrest.

Von wesentlicher Bedeutung für die Eigenschaften der Verbindungen sind die Zahlenwerte der Indices n und m. n gibt die Anzahl der Methylalkylsiloxyeinheitenan und bestimmt die Kettenlänge der Blockmischpolymerisate. n hat bei den erfindungsgemäß zu verwendenden Verbindungen einen Zahlenwert von 40 bis 60. Es ist dem Fachmann geläufig, daß die Verbindungen in Form eines Gemisches mit einer im wesentlichen durch statistische Gesetze geregelten Verteilung vorliegen. Der Wert von n stellt deshalb den Mittelwert der Anzahl der Methylalkylsiloxyeinheiten dar.

m hat einen Wert von 0 bis 3, vorzugsweise von 0 bis 2. Ist $m = 0$, handelt es sich bei den Verbindungen um lineare Siloxane, welche endständig Polyoxyalkyleneinheiten tragen. Ist $m > 0$, befinden, sich auch Polyoxyalkyleneinheiten in der Kette gebunden. Es hat sich gezeigt, daß diese Struktur der Blockmischpolymerisate für das Zustandekommen des patentgemäßen Effektes von entscheidender Bedeutung ist.

Die Polyoxyalkylenblöcke bestehen aus Oxyethylen- und Oxypropyleneinheiten, wobei das Molgewicht der Polyoxyalkylenblöcke jeweils 1400 bis 3000 beträgt. Das Molverhältnis der Oxyethylen- zu den Oxypropyleneinheiten, ausgedrückt durch das Verhältnis x : y, beträgt 0,8 bis 2,2, vorzugsweise 0,9 bis 1,6.

Beispiele erfindungsgemäß zu verwendender Verbindungen sind

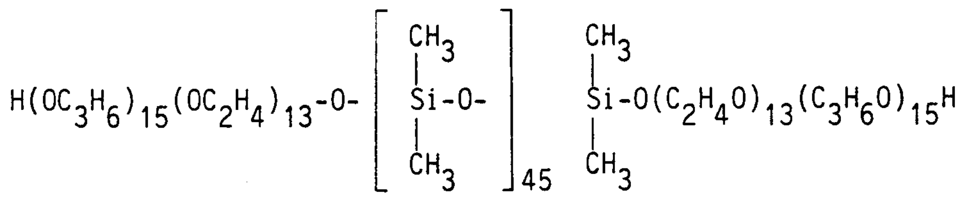

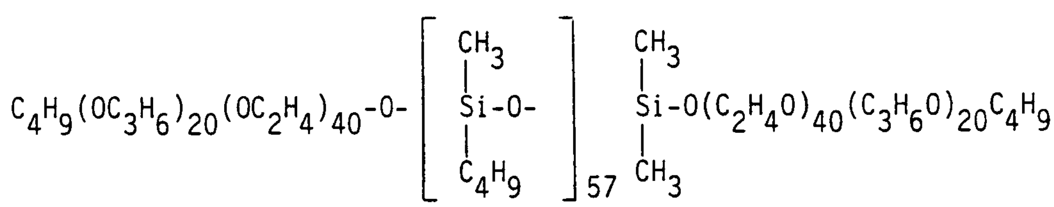

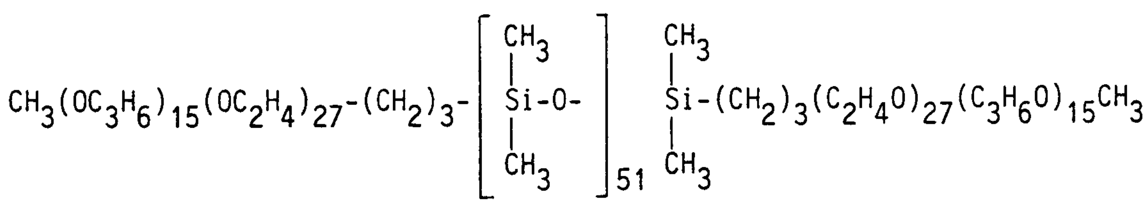

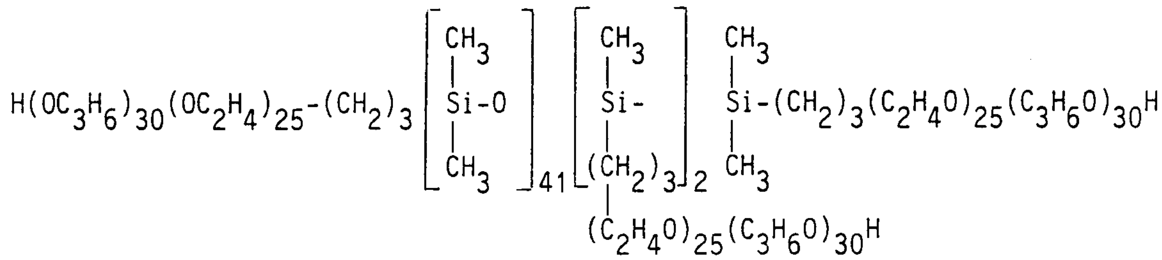

Die erfindungsgemäß zu verwendenden Verbindungen werden den Lacken in Mengen von 0,001 bis 0,5 Gew.-%, bezogen auf Lack, zugesetzt. Unter Lack ist dabei die verarbeitungsgerechte Zubereitungsform des Lackes zu verstehen.

Die erfindungsgemäß zu verwendenden Verbindungen reichern sich an der Oberfläche des ausgehärteten Lacksystems an und bewirken dort die Verbesserung der Kratzfestigkeit und die Erhöhung der Gleitfähigkeit. Dies führt zur Verringerung oder Vermeidung der Oberflächenfehler von frisch lackierten Oberflächen, wie sie eingangs beschrieben sind. Es handelt sich dabei im wesentlichen um eine temporäre Verbesserung der Oberflächeneigenschaften, da die erfindungsgemäß zu verwendenden Verbindungen im Lauf der Zeit von der Lackoberfläche durch Abwaschen oder mechanische Einwirkung entfernt werden.

Die erfindungsgemäß zu verwendenden Verbindungen können in an sich bekannter Weise dadurch hergestellt werden, daß man die entsprechenden Halogensiloxane, welche gegebenenfalls noch an Si-Atome gebundene Sulfatgruppen aufweisen, mit Polyoxyalkylenglykolen, deren Monoethern oder Monoestern, z.B. entsprechend der US-PS 3 115 512, umsetzt. Es ist auch möglich, die entsprechenden Alkoxysiloxane mit Polyoxyalkylenmonoethern oder Polyoxyalkylenmonoestern umzuestern. Die Umesterungsreaktion wird durch Alkalihydroxide oder durch Säuren, wie z.B. Trifluoressigsäure, katalysiert und ist in der DE-PS 10 12 602 und in der DE-PS 10 40 251 beschrieben.

Die Blockmischpolymerisate, bei denen die Polyoxyalkylenblöcke über SiC-Bindungen an die Siloxaneinheiten gebunden sind, können durch Anlagerung von Polyoxyalkyenethern olefinisch ungesättigter Alkohole, wie z.B. Allylpolyoxyalkylenethern, an die entsprechende Wasserstoffsiloxane hergestellt werden. Diese Reaktion wird durch Platinverbindungen katalysiert und ist z.B. in der DE-PS 11 65 028 beschrieben.

Etwaige Gehalte an freien Polyoxyalkylenglykolen oder deren Monoethern oder Monoestern, welche herstellungsbedingt in den erfindungsgemäß zu verwendenden Verbindungen enthalten sein können, können toleriert und müssen nicht von dem Produkt abgetrennt werden.

Im folgenden werden die anwendungstechnischen Eigenschaften verschiedener erfindungsgemäß zu verwendender Verbindungen gezeigt.

Zur Überprüfung der anwendungstechnischen Eigenschaften werden die folgenden Lackrezepturen A) bis F) ausgewählt (Mengenangaben in Gew.-%):

| | | |
|---|---|---|
| A) | Acrylatharz (50 %ige Lösung) [1] | 54,50 |
| | Epoxidharz (Äquivalentgewicht ca. 450) [2] | 8,10 |
| | $TiO_2$ | 19,50 |
| | Celluloseacetobutyrat (35 %ig in Ethylglykolacetat) | 7,00 |
| | Xylol | 2,85 |
| | Ethylhexanol | 1,90 |
| | Tetralin | 1,40 |
| | Butylglykol | 4,75 |

[1] im Handel erhältlich unter der Bezeichnung Paraloid AT 50

[2] im Handel erhältlich unter der Bezeichnung Epoxidharz DER 671

| | |
|---|---|
| B) mittelöliges Alkydharz (Ölgehalt ca. 30 %; 60 %ig in Xylol) [3) ] | 60,00 |
| $TiO_2$ | 20,00 |
| ß-Cu-phthalocyanin | 4,00 |
| Polyaminamid | 0,50 |
| Ca-naphthenat | 0,50 |
| Ethylglykol | 3,00 |
| Solvesso 100 | 2,50 |
| Bleioctoat | 2,00 |
| Ketoxim | 0,30 |
| Xylol | 7,20 |

3) im Handel erhältlich unter der Bezeichnung Jägalyd TH 58 N

| | |
|---|---|
| C) Alkydharz (Ölgehalt ca. 33 %; 60 %ig in Xylol) [4)] | 51,20 |
| Melaminharz (70 %ig in Butanol) [5)] | 14,60 |
| $TiO_2$ | 24,60 |
| Butanol | 0,80 |
| Ethylglykolacetat | 1,60 |
| Xylol | 7,20 |

4) im Handel erhältlich unter der Bezeichnung Setal 126 XX 60

5) im Handel erhältlich unter der Bezeichnung Setamine US 132 BB 70

| | |
|---|---|
| D) Nitrocellulose [6] | 10,00 |
| Ethylacetat | 26,00 |
| Butylacetat | 20,00 |
| Isopropanol | 10,00 |
| Toluol | 15,00 |
| Xylol | 5,00 |
| kurzöliges Alkydharz (60 %ig in Xylol) [7] | 10,00 |
| Dioctylphthalat | 3,00 |
| Silicat | 1,00 |

[6] im Handel erhältlich unter der Bezeichnung Walsroder NC Chips E 520

[7] im Handel erhältlich unter der Bezeichnung Alkydal E 411

| | |
|---|---|
| E) Acrylatharz (60 %ig in Xylol, Ethylglykolacetat) [8] | 51,10 |
| Bleichromat | 13,50 |
| Xylol | 5,20 |
| Butylacetat | 5,20 |
| Ethylglykolacetat | 4,25 |
| Dibutylzinndilaurat | 0,15 |
| Diethanolamin | 0,20 |
| Isocyanat [9] | 20,40 |

[8] im Handel erhältlich unter der Bezeichnung Desmophen 1300

[9] im Handel erhältlich unter der Bezeichnung Desmodur IL

| | | |
|---|---|---|
| F) | Polyester (75 %ig in Xylol) [10] | 28,40 |
| | Mischpolymerisat (PVC, PVAc, PVA; 20 %ig in Ethylglykolacetat) | 10,00 |
| | Ethylacetat | 27,20 |
| | Methylisobutylketon | 10,20 |
| | Toluol | 6,50 |
| | Ethylglykolacetat | 3,40 |
| | Isocyanat [11] | 14,30 |

[10] im Handel erhältlich unter der Bezeichnung Macrynal SM 510 N

[11] im Handel erhältlich unter der Bezeichnung Desmodur N 75

Die zu überprüfenden Verbindungen 1 bis 7 entsprechen der allgemeinen Formel I. Dabei haben die Reste $R^1$, $R^2$, $R^3$ und die Indices n und m sowie der Quotient x/y die in Tabelle 1 gezeigten Bedeutungen bzw. Werte.

Tabelle 1

| Verbindung | $R^1$ | $R^2$ | $R^3$ | n | m | x/y | |
|---|---|---|---|---|---|---|---|
| 1 | $CH_3$ | -O- | $C_4H_9$ | 55 | 0 | 0,93 | erfindungsgemäß |
| 2 | $CH_3$ | $-(CH_2)_3O-$ | H | 45 | 0 | 0,95 | erfindungsgemäß |
| 3 | $CH_3$ | $-(CH_2)_3O-$ | H | 60 | 0,3 | 1,35 | erfindungsgemäß |
| 4 | $CH_3$ | $-(CH_2)_3O-$ | H | 53 | 2,5 | 0,93 | erfindungsgemäß |
| 5 | $CH_3$ | -O- | $C_4H_9$ | 15 | 0 | 1,35 | nicht erfindungsgemäß |
| 6 | $CH_3$ | $-(CH_2)_3O-$ | H | 50 | 4 | 0,95 | nicht erfindungsgemäß |
| 7 | $CH_3$ | -O- | $C_4H_9$ | 98 | 0 | 0 | nicht erfindungsgemäß |

Die Verbindungen 1 bis 7 werden in einen Lack gemäß Rezeptur A) in Konzentrationen von 0,05 Gew.-% und 0,1 Gew.-% eingemischt. Die Lacke werden anschließend auf Bonderbleche (Typ 1401) in einer Schichtdicke von 90 µm aufgerakelt und bei Temperaturen, die den jeweiligen Bindemitteln entsprechen, ausgehärtet. Zur Messung der Gleitwiderstandswerte G der Lackoberfläche wird ein mit einer Filzauflage versehener Gewichtsstein (500 g) mit konstanter Geschwindigkeit (12,8 mm/sec) über die waagerechte Lackoberfläche gezogen. Die angegebenen Werte G [pond] (Tabelle 2) sind Mittelwerte aus mehreren Messungen.

Tabelle 2

| Konzentration / Verbindung | Gleitwiderstandswerte G [ pond ] 0,05 Gew.-% | 0,1 Gew.-% | |
|---|---|---|---|
| 1 | 48 | 45 | erfindungsgemäß |
| 2 | 41 | 34 | erfindungsgemäß |
| 3 | 40 | 35 | erfindungsgemäß |
| 4 | 52 | 48 | erfindungsgemäß |
| 5 | 220 | 100 | nicht erfindungsgemäß |
| 6 | 82 | 75 | nicht erfindungsgemäß |
| 7 | 105 | 98 | nicht erfindungsgemäß |
| ohne Zusatz | 266 | | nicht erfindungsgemäß |

Die erfindungsgemäß zu verwendenden Zusatzmittel zeichnen sich durch ihre universelle Anwendbarkeit aus. Dies wird durch die Gleitwiderstandswerte G in Tabelle 3 belegt. Zur Bestimmung der Gleitwiderstandswerte G werden die Zusatzstoffe in die Lacke A) bis F) in Konzentrationen von 0,025 Gew.-% 0,05 Gew.-% und 0,1 Gew.-% eingearbeitet. Die Lacke werden durch luftunterstütztes Spritzen auf Bonderbleche (Typ 1401) aufgetragen (Schichtdicke ca. 100 µm) und ausgehärtet. Die Bestimmung der Werte G erfolgt wie oben beschrieben.

Tabelle 3 a

| Zusatzstoff | Zusatz Gew.-% | Gleitwiderstandswerte G [pond] von Lackoberflächen | | |
|---|---|---|---|---|
| | | Lacke gemäß Rezeptur | | |
| | | A | B | C |
| | ohne | 266 | 228 | 282 |
| Verbindung 3 (erfindungsgemäß) | 0,025<br>0,05<br>0,1 | 48<br>40<br>35 | 84<br>38<br>29 | 56<br>47<br>40 |
| Vergleichsprodukt A | 0,025<br>0,05<br>0,1 | 194<br>123<br>105 | 230<br>222<br>154 | 170<br>116<br>84 |
| Vergleichsprodukt B | 0,025<br>0,05<br>0,1 | 90<br>94<br>93 | 179<br>123<br>93 | 53<br>47<br>43 |
| Vergleichsprodukt C | 0,025<br>0,05<br>0,1 | 84<br>65<br>55 | 89<br>78<br>53 | 81<br>75<br>78 |
| Vergleichsprodukt D | 0,025<br>0,05<br>0,1 | 216<br>209<br>107 | 176<br>123<br>79 | 107<br>84<br>70 |
| Vergleichsprodukt E | 0,025<br>0,05<br>0,1 | 71<br>56<br>53 | 139<br>113<br>96 | 82<br>72<br>66 |

Tabelle 3 b

| Zusatzstoff | Zusatz Gew.-% | Gleitwiderstandswerte G [pond] von Lackoberflächen | | |
|---|---|---|---|---|
| | | Lacke gemäß Rezeptur | | |
| | | D | E | F |
| | ohne | 140 | 366 | 236 |
| Verbindung 3 (erfindungsgemäß) | 0,025<br>0,05<br>0,1 | 100<br>85<br>80 | 63<br>56<br>45 | 56<br>56<br>53 |
| Vergleichsprodukt A | 0,025<br>0,05<br>0,1 | 130<br>130<br>140 | 218<br>121<br>92 | 236<br>211<br>189 |
| Vergleichsprodukt B | 0,025<br>0,05<br>0,1 | 128<br>115<br>112 | 106<br>105<br>100 | 146<br>131<br>115 |
| Vergleichsprodukt C | 0,025<br>0,05<br>0,1 | 119<br>94<br>100 | 79<br>72<br>66 | 209<br>187<br>86 |
| Vergleichsprodukt D | 0,025<br>0,05<br>0,1 | 112<br>100<br>100 | 232<br>246<br>154 | 106<br>97<br>90 |
| Vergleichsprodukt E | 0,025<br>0,05<br>0,1 | 127<br>110<br>100 | 70<br>67<br>54 | 101<br>89<br>85 |

Vergleichsprodukt A im Handel erhältlich unter der Bezeichnung Byk 300
Vergleichsprodukt B im Handel erhältlich unter der Bezeichnung Byk 320
Vergleichsprodukt C im Handel erhältlich unter der Bezeichnung Dow Corning PA 11
Vergleichsprodukt D im Handel erhältlich unter der Bezeichnung Wacker LO 54
Vergleichsprodukt E im Handel erhältlich unter der Bezeichnung Borchers LAC 80

Die Vergleichsprodukte A und B sind, wie sich aus den spektroskopischen Untersuchungen ergibt, Polyoxyalkylen-Polysiloxan-Blockmischpolymerisate mit einer Struktur, die von der der erfindungsgemäß zu verwendenden Verbindungen abweicht.

## Patentansprüche

**1.** Verwendung von Verbindungen der allgemeinen Formel

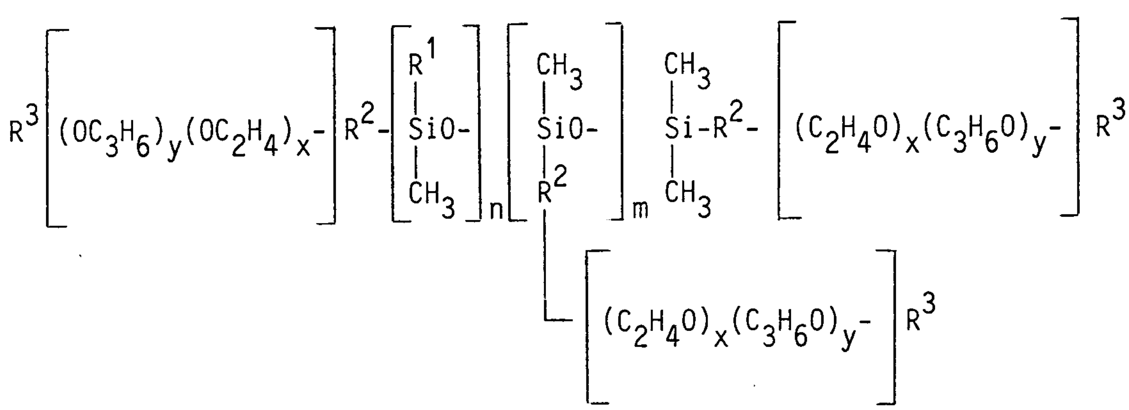

$R^1$ = Alkylrest mit 1 bis 8 Kohlenstoffatomen,

$R^2$ = -O-, $(CH_2)pO$-, wobei p = 2, 3 oder 4 ist,
$R^3$ = Wasserstoffest, Alkylrest mit 1 bis 4 Kohlenstoffatomen oder Acetylrest,
n = 40 bis 60,
m = 0 bis 3,

wobei x und y so gewählt sind, daß das Molgewicht des Polyoxyalkylenblocks 1400 bis 3000 beträgt und das Molverhältnis x : y = 0,8 bis 2,2 ist,
in Mengen von 0,001 bis 0,5 Gew.-%, bezogen auf als Mittel zur Verbesserung der Kratzfestigkeit und Erhöhung der Gleitfähigkeit von Lackoberflächen.

## Claims

1. Use of compounds of the general formula

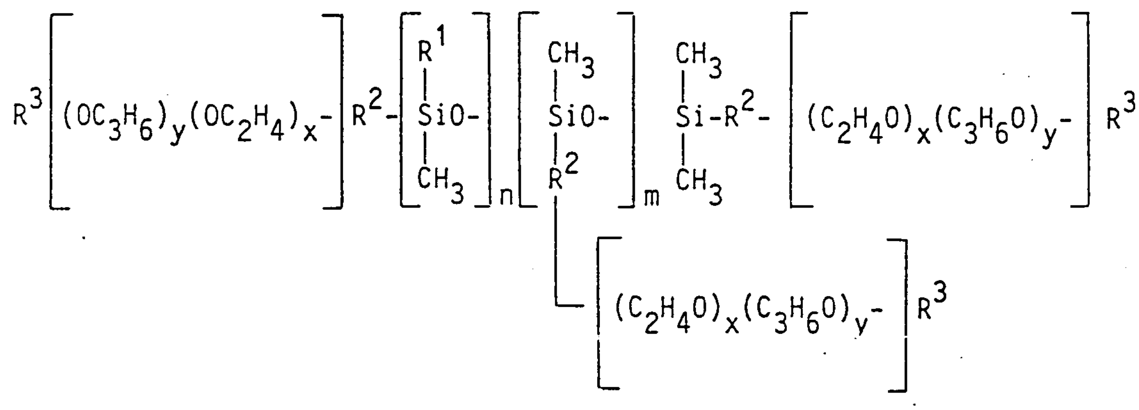

in which
$R^1$ is an alkyl radical having 1 to 8 carbon atoms,
$R^2$ is -O- or $-(CH_2)_pO-$, where p = 2, 3 or 4,
$R^3$ is a hydrogen radical, an alkyl radical having 1 to 4 carbon atoms or an acetyl radical,
n is from 40 to 60,
m is from 0 to 3,
x and y are selected so that the molecular weight of the polyoxyalkylene block is 1400 to 3000 and the x : y molar ratio is from 0.8 to 2.2,
in amounts of from 0.001 to 0.5% by weight based on the paint, as agents for improving the scratch resistance and increasing the surface slip of paint surfaces.

## Revendications

1. Utilisation des composés répondant à la formule générale

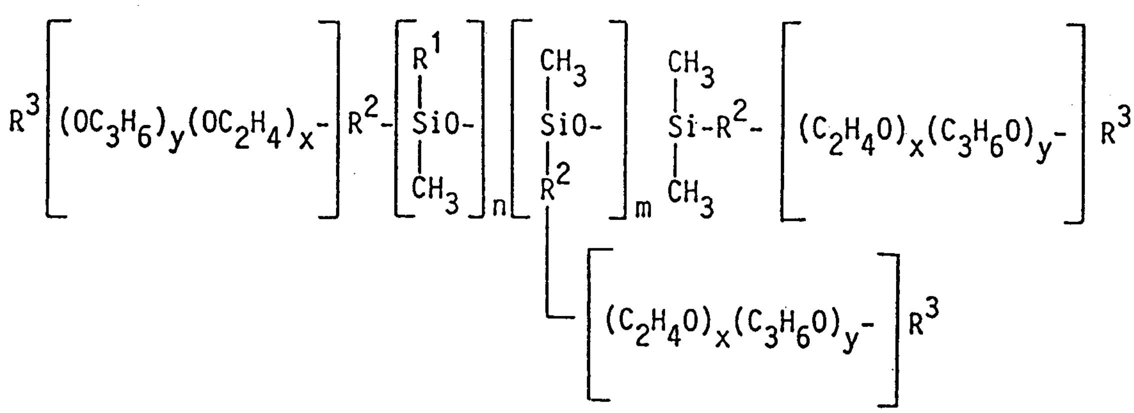

$R^1$ = reste alcoyle comportant 1 à 8 atome(s) de carbone,

$R^2$ = -O-, $(CH_2)_pO$- où p = 2, 3 ou 4,
$R^3$ = un reste hydrogène, un reste alcoyle comportant 1 à 4 atome(s) de carbone, ou un reste acétyle,
n = 40 à 60,
m = 0 à 3,

x et y étant choisis de façon à ce que le poids molaire de la séquence de polyoxyalcoylène soit de 1.400 à 3.000 et que le rapport molaire x : y = 0,8 à 2,2,
en une quantité de 0,001 à 0,5 % en poids par rapport au vernis, comme agent d'amélioration de la résistance à l'abrasion et d'augmentation du pouvoir glissant des surfaces vernies.